# EUROPÄISCHE PATENTANMELDUNG

(11) **EP 1 602 528 A2**
(43) Veröffentlichungstag der Anmeldung: **07.12.2005**
(21) Anmeldenummer: 05017267.5
(22) Anmeldetag: 07.07.1999
(51) Int. Cl.: B60N 3/00

(54) **Klapptisch zum Anbringen an einer Rückseite einer Rückenlehne eines Fahrgastsitzes in einem Omnibus oder Flugzeug**

(30) Priorität: 28.07.1998 DE 19833888
(62) Teilanmeldung aus: 99113129.3
(71) Anmelder: fischerwerke Artur Fischer GmbH & Co. KG, 72178 Waldachtal (DE); EvoBus GmbH, 70567 Stuttgart (DE)
(72) Erfinder: Plocher, Bernd, 72108 Rottenburg-Seebronn (DE); Kühn, Stefan, 75387 Neubulach (DE); Hein, Andre, 71083 Herrenberg (DE); Keller, Michael, 72250 Freudenstadt (DE); Groth, Sören, 71083 Herrenberg (DE); Jessberger, Monika, 89231 Neu-Ulm (DE); Kriegelsteiner, Franz, 89171 Illerkirchberg (DE)

(57) **Zusammenfassung**

Die Erfindung betrifft einen Klapptisch (10) zur Anbringung an einer Rückseite einer Rückenlehne eines nicht dargestellten Fahrgastsitzes in einem Omnibus oder Flugzeug. Um einen derartigen Klapptisch (10) zu schaffen, bei dem ein vermindertes Verletzungsrisiko eines Fahrgastes bei einem Unfall besteht, schlägt die Erfindung vor, dass . Um den Halter (20) auch bei nach oben an die Rückenlehne des Fahrgastsitzes geschwenktem Klapptisch (10) benutzen zu können, schlägt die Erfindung vor, dass der Klapptisch (10) einen Sicherheitsbeschlag (16, 60, 64) mit einem Anschlag (76), der den Schwenkwinkel des Klapptischs (10) in Richtung der Gebrauchslage begrenzt, aufweist, und dass der Anschlag (76) durch Überschreiten einer am Klapptisch (10) in Richtung der Gebrauchslage wirkenden Grenzbelastung überwindbar ist.

## Beschreibung

Die Erfindung betrifft einen Klapptisch zur Anbringung an einer Rückseite einer Rückenlehne eines Fahrgastsitzes in einem Omnibus oder Flugzeug mit den Merkmalen des Oberbegriffs des Anspruchs 1.

Derartige Klapptische sind an sich bekannt, sie sind mittels eines Schwenkgelenks an der Rückseite der Rückenlehne eines Fahrgastsitzes angeordnet. Die bekannten Klapptische lassen sich aus einer Nichtgebrauchslage, in der sie im wesentlichen an der Rückseite der Rückenlehne anliegen, in eine Gebrauchslage, in der sie in etwa horizontal von der Rückseite der Rückenlehne abstehen, und umgekehrt schwenken. Auch ist es bekannt, einen derartigen Klapptisch mit einer beispielsweise kreisrunden Vertiefung auszubilden, in die ein Getränkebehälter wie eine Getränkedose, eine Tasse, ein Becher einstellbar ist. Die Vertiefung gibt dem eingestellten Getränkebehälter Halt gegen Verrutschen, verhindert jedoch nicht ein Umkippen des Getränkebehälters.

Der Erfindung liegt die Aufgabe zugrunde, einen Klapptisch der eingangs genannten Art so auszubilden, dass das Verletzungsrisiko eines Fahrgastes bei einem Unfall vermindert wird.

Diese Aufgabe wird erfindungsgemäß durch die Merkmale des Anspruchs 1 gelöst. Der erfindungsgemäße Klapptisch weist einen Sicherheitsbeschlag auf, der ein Schwenken des Klapptischs aus der horizontalen Gebrauchslage nach unten zuläßt, wenn der Klapptisch überbeansprucht wird. Der Sicherheitsbeschlag dient zur Verminderung des Verletzungsrisikos eines Fahrgastes bei einem Unfall, er ermöglicht ein Wegklappen des Klapptischs nach unten, wenn der Fahrgast beispielsweise mit dem Kopf auf den Klapptisch trifft. Bei normaler Belastung hält der Sicherheitsbeschlag den Klapptisch in seiner Gebrauchslage. Der Sicherheitsbeschlag weist einen Anschlag auf, der den Schwenkwinkel des Klapptischs von der Nichtgebrauchsstellung in die in etwa horizontale Gebrauchsstellung begrenzt. Dieser Anschlag wird durch Überlastung des Klapptischs überwunden. Diese Ausgestaltung des erfindungsgemäßen Klapptischs kann unabhängig vom Vorhandensein eines Halters für einen Getränkebehälter am erfindungsgemäßen Klapptisch verwirklicht sein.

Bei einer Weiterbildung der Erfindung ist der Anschlag am Umfang eines Schwenkzapfens ausgebildet, um den der Klapptisch schwenkbar ist. Der Anschlag wirkt mit einem federbetätigten Schieber zusammen und drückt den Schieber außer Eingriff vom Anschlag, wenn der Klapptisch überlastet wird, so dass der Klapptisch aus seiner horizontalen Gebrauchsstellung nach unten wegschwenkt. Der Schwenkzapfen kann feststehen oder mit dem Klapptisch mitdrehend sein.

Zur Befestigung kann der Klapptisch beispielsweise mit seitlich abstehenden Befestigungszapfen in komplementäre Aufnahmen von Klapptischhaltern eingesetzt werden, die an der Rückenlehne des Fahrgastsitzes angebracht sind. Um bei in der Neigung verstellbarer Rückenlehne ein Mitschwenken des Klapptischs zu vermeiden, können auch seitliche Streben als Klapptischhalter vorgesehen sein, die an einem feststehenden Teil des Fahrgastsitzes oder an einem Fahrzeugboden angebracht sind und daher nicht mit der Rückenlehne mitschwenken. Um die horizontale Gebrauchslage des Klapptischs nicht justieren zu müssen, ist bei einer Ausgestaltung ein Adapter vorgesehen, der durch Formschluß sowohl am Klapptisch als auch am Klapptischhalter die horizontale Gebrauchslage sicherstellt. Durch Verwendung unterschiedlicher Adapter läßt sich der Klapptisch an unterschiedliche Klapptischhalter, insbesondere an in unterschiedlichen Winkeln angebrachte Klapptischhalter, anpassen. Diese Ausgestaltung der Erfindung hat den Vorteil, dass der Klapptisch lediglich in die Klapptischhalter eingesetzt werden muß und die horizontale Gebrauchslage durch das Einsetzen in die Klapptischhalter bereits gegeben ist und nicht erst eingestellt werden muß.

Der Formschluß kann beispielsweise durch ein unregelmäßiges Polygon- oder Zahnprofil, durch eine nach innen oder außen abstehende Nase oder dgl. bewirkt werden. Bei einer Ausgestaltung der Erfindung ist der Adapter als Adapterring mit einer eine eindeutige Winkelstellung festlegenden Innen- und Außenkontur ausgebildet.

Die Erfindung wird nachfolgend anhand zweier in der Zeichnung dargestellter Ausführungsbeispiele näher erläutert. Es zeigen:
- Figur 1: einen erfindungsgemäßen Klapptisch in einer Gebrauchslage;
- Figur 2: ein Unterteil des Klapptischs aus Figur 1;
- Figur 3: den Klapptisch aus Figur 1 in einer Nichtgebrauchslage;
- Figur 4: eine vergrößerte Darstellung eines Befestigungszapfens des Klapptischs aus Figur 1;
- Figur 5: einen Querschnitt durch den Befestigungszapfen aus Figur 4;
- Figur 6: einen Adapterring des erfindungsgemäßen Klapptischs;
- Figur 7: ein zweites Ausführungsbeispiel eines erfindungsgemäßen Klapptischs in einer Gebrauchslage; und
- Figur 8: den Klapptisch aus Figur 6 in einer Nichtgebrauchslage.

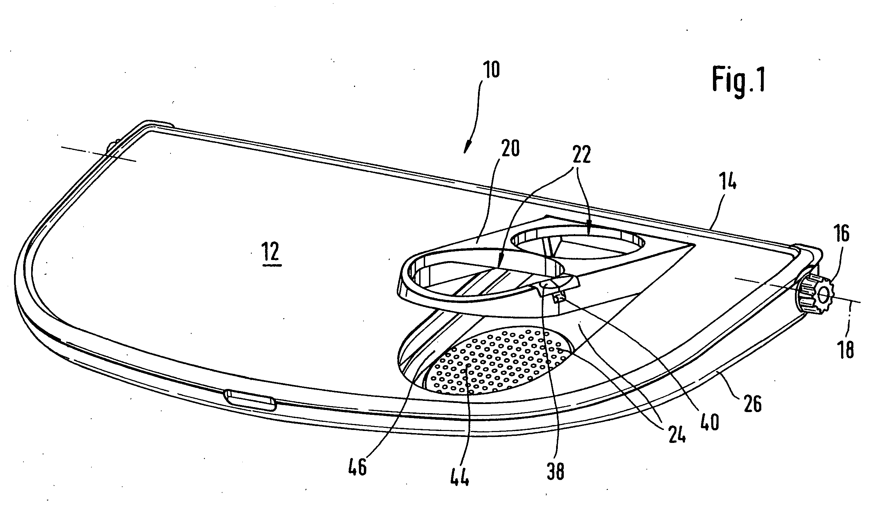

Figur 1 zeigt einen erfindungsgemäßen Klapptisch 10 in einer Gebrauchslage, in der er horizontal von einer Rückseite einer nicht dargestellten Rückenlehne eines Fahrgastsitzes in einem Omnibus oder Flugzeug absteht. Der Klapptisch 10 ist aus Kunststoff-Spritzgußteilen zusammengesetzt, er weist eine Stellfläche 12 auf.

Zur Anbringung an der Rückenlehne stehen seitlich nahe einem vorderen Rand 14 des Klapptischs 10 profilierte Befestigungszapfen 16 ab, die durch Formschluß drehfest in nicht dargestellte, komplementäre Aufnahmen einsetzbar sind, die an der Rückseite der nicht dargestellten Rückenlehne angebracht sind. Die Befestigungszapfen 16 sind um einen begrenzten Schwenkwinkel schwenkbar im Klapptisch 10 gelagert, sie definieren eine horizontale Schwenkachse 18 nahe dem vorderen Rand 14 des Klapptischs 10, zu dem die Schwenkachse 18 parallel verläuft.

Im rechten Bereich des Klapptischs 10 ist ein Halter 20 zum Einstellen eines nicht dargestellten Getränkebehälters wie beispielsweise einem Becher, einer Tasse oder einer Getränkedose eingelassen. Der Halter 20 ist plattenförmig und hat in der Draufsicht die Form eines Halbovals, wobei eine halbrunde Seite des Halbovals dem vorderen Rand 14 des Klapptischs 10 abgewandt ist.

Der Halter 20 ist um eine mit der Schwenkachse 18 des Klapptischs 10 fluchtende Achse schwenkbar im Klapptisch 10 gelagert. In seiner Gebrauchslage steht der Halter 20 schräg nach oben aus dem Klapptisch 10 vor. Der Halter 20 weist zwei kreisrunde Einstellöffnungen 22 für zwei Getränkebehälter auf. Die eingestellten Getränkebehälter stehen auf einer im Klapptisch 10 versenkten Stellfläche 24 auf. Bei Nichtgebrauch läßt sich der Halter 20 in eine im Klapptisch 10 versenkte Nichtgebrauchslage schwenken, in der der Halter 20 bündig mit der Abstellfläche 12 des Klapptischs 10 ist.

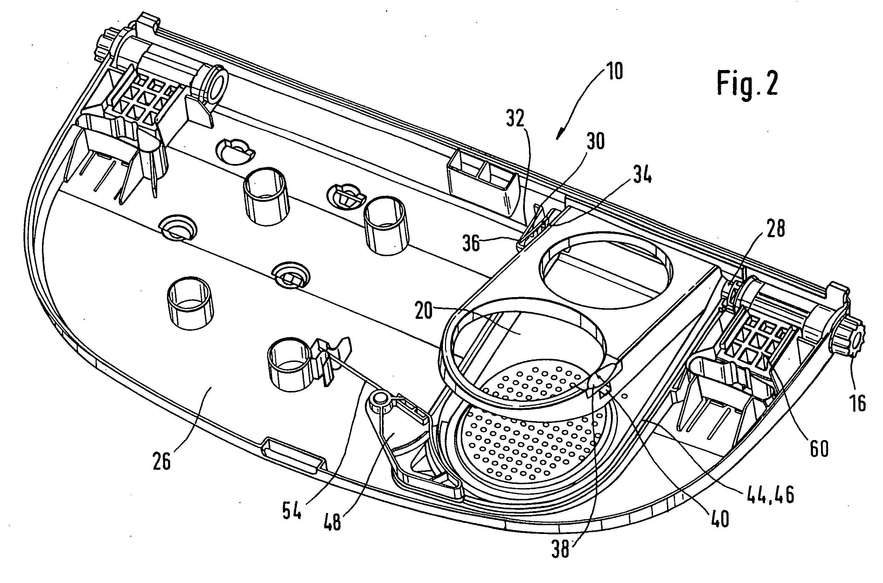

Der Klapptisch 10 ist zweischalig aus einem die Abstellfläche 12 umfassenden Oberteil und einem Unterteil hergestellt. Figur 2 zeigt den Klapptisch 10 ohne das Oberteil, so dass das Unterteil 26 des Klapptischs 10, in dem der Halter 20 und die Befestigungszapfen 16 schwenkbar gelagert sind, sichtbar ist. Der Halter 20 ist mit einer Schwenkzapfenverbindung 28 im Klapptisch 10 gelagert. Die Schwenkzapfenverbindung 28 weist zwei seitlich vom Halter 20 abstehende Lagerzapfen auf, die in komplementäre Lagerlöcher des Unterteils 26 des Klapptischs 10 eingreifen. Eine seitlich angebrachte Bügelfeder 30, die sich am Unterteil 26 des Klapptischs 10 abstützt, drückt den Halter 20 in seine schräg nach oben stehende Gebrauchslage. Die Schwenkbewegung des Halters 20 wird von einem Rotationsdämpfungselement 32 gedämpft, dessen Zahnrad mit einem Zahnradsegment 34 kämmt, welches einstückig an einer Seite des Halters 20 angebracht ist. Das Rotationsdämpfungselement 32 ist in eine Aufnahme 36 im Unterteil 26 des Klapptischs 10 drehfest eingesetzt.

Eine Verriegelungseinrichtung 38, 40 hält den Halter 20 gegen die Kraft der Schenkelfeder 30 in der im Klapptisch 10 versenkten Nichtgebrauchslage, wie sie in Figur 2 dargestellt ist. Die Verriegelungseinrichtung 38, 40 umfaßt eine Taste 38, die mit Abstand von der Schwenkzapfenverbindung 28 am Seitenrand des Halters 20 angeordnet ist. Die Taste 38 ist einstückig mit einer seitlich über den Halter 20 vorstehenden Rastnase 40 (Figur 1), die in der Nichtgebrauchslage des Halters 20 die Abstellfläche 12 des Klapptischs 10 untergreift und dadurch den Halter 20 in der Nichtgebrauchslage hält. Durch Druck auf die Taste 38 wird die Rastnase 40 außer Eingriff gebracht, so dass der Halter 20 federbetätigt in die schräg nach oben stehende Gebrauchslage schwenkt. Die Rastnase 40 weist eine Schrägfläche an ihrer Unterseite auf, so dass sie beim Niederdrücken des Halters 20 in den Klapptisch 10 selbsttätig unter der Abstellfläche 12 einrastet.

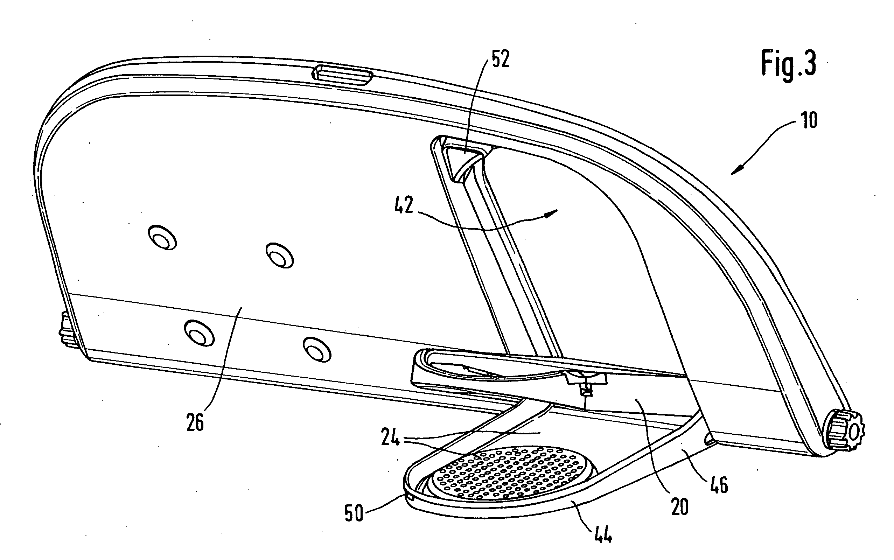

Figur 3 zeigt den Klapptisch 10 in einer nach oben geschwenkten Nichtgebrauchslage, in der der Klapptisch 10 an die Rückseite der Rückenlehne des nicht dargestellten Fahrgastsitzes geschwenkt ist. Figur 3 zeigt also einen Blick auf eine Unterseite des Klapptischs 10.

Wie in Figur 3 zu sehen, ist der Halter 20 in einer von einer Oberseite zur Unterseite des Klapptischs 10 durchgehenden Ausnehmung 42 des Klapptischs 10 aufgenommen. Unter dem Halter 20 ist eine Stütze 44 angeordnet, deren Boden die Abstellflächen 24 für in den Halter 20 eingestellte Getränkebehälter bildet. Die Stütze 44 hat in Draufsicht ebenso wie der Halter 20 die Form eines Halbovals. Die Stütze 44 ist mit einem nach oben stehenden Rand 46 als Auffangschale für aus einem eingestellten Getränkebehälter herausschwappende Flüssigkeit ausgebildet. Eine Höhe des Randes 46 ist geringer als eine Dicke des Klapptischs 10. Der Halter 20 liegt in der Nichtgebrauchslage in der Stütze 44 ein.

Die Stütze 44 ist um dieselbe Schwenkachse wie der Halter 20 im Klapptisch 10 gelagert. Zur Schwenklagerung sind Zapfenlöcher in der Seitenwand 46 der Stütze 44 angebracht, die von den Zapfen des Halters 20 durchgriffen werden. Die Stütze 44 ist also wie der Halter 20 mit dem Zapfenlager 28 (Figur 2) schwenkbar am Klapptisch 10 angebracht.

Eine Verriegelungseinrichtung 48, 50, 52 hält die Stütze 44 in einer in den Klapptisch 10 versenkten Grundstellung, in der die Stütze 44 bündig mit einer Unterseite des Klapptischs 10 ist. Die Verriegelungseinrichtung umfaßt einen Schwenkriegel 48, der schwenkbar im Unterteil 26 des Klapptischs 10 gelagert ist (Figur 2). Eine mit dem Schwenkriegel 48 einstückige, in der Zeichnung nicht sichtbare Nase greift in eine Aussparung 50 im Seitenrand 46 der Stütze 44 ein, so dass die Stütze 44 in ihrer im Klapptisch 10 versenkten Grundstellung gehalten ist. Durch Druck gegen eine mit dem Schwenkriegel 48 einstückige, an der Unterseite des Klapptischs 10 angeordnete Taste 52 (Figur 3) läßt sich der Schwenkriegel 48 außer Eingriff von der Stütze 44 bringen, so dass die Stütze 44 durch Schwerkraft aus der Unterseite des Klapptischs 10 herausschwenkt. In der an die Rückseite der nicht dargestellten Rückenlehne Nichtgebrauchslage des Klapptischs 10 schwenkt die Stütze 44 in eine horizontale Stützlage herunter, wie in Figur 3 dargestellt. Eine Schenkelfeder 54 drückt den Schwenkriegel 48 in Eingriff mit der Stütze 44.

Die Schenkelfeder 32 des Halters 20, die sich an der Stütze 44 abstützt, drückt den Halter 20 in eine schräg nach oben von der Stütze 44 abstehende Gebrauchslage. In dieser Lage steht der Halter 20 ebenso wie die Stütze 44 an der Unterseite des Klapptischs 10 heraus. In der Nichtgebrauchslage des Klapptischs 10, in der der Klapptisch 10 schräg nach oben stehend an der Rückseite der Rückenlehne des nicht dargestellten Fahrgastsitzes anliegt, schwenken also der Halter 20 und die Stütze 44 nach Entriegelung des Schwenkriegels 48 aus einer Unterseite des Klapptischs 10 heraus. Die Stütze 44 schwenkt bis in eine horizontale Stützlage, der Halter 20 steht schräg nach oben von der Stütze 44 ab, er befindet sich also oberhalb der Stütze 44 und hält einen nicht dargestellten, in den Halter 20 eingestellten Getränkebehälter kippsicher. Der Halter 20 ist dadurch sowohl in der Gebrauchslage als auch in der Nichtgebrauchslage des Klapptischs 10 zum Einstellen eines oder zweier Getränkebehälter nutzbar.

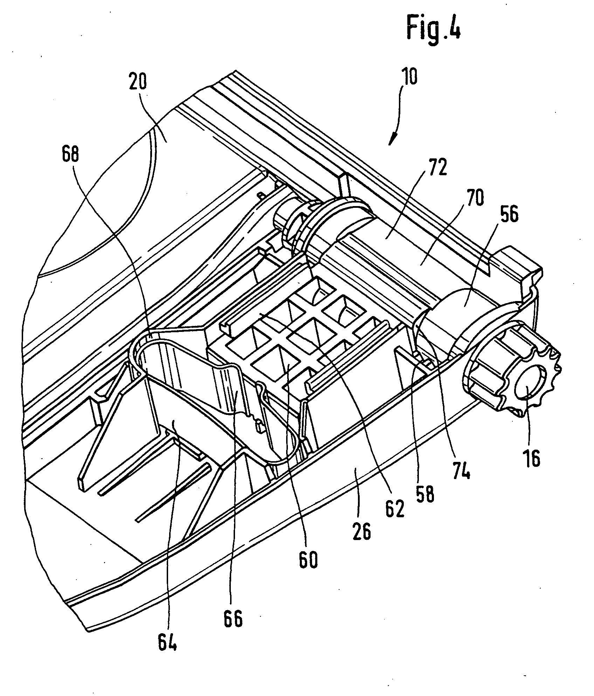

Die seitlich aus dem Klapptisch 10 vorstehenden Befestigungszapfen 16 sind in Vergrößerung in Figur 4 dargestellt. Sie weisen zylindrische Lagerflächen 56 auf, mit denen sie in Halblagern 58 im Unterteil 26 sowie in ebensolchen, nicht sichtbaren Halblagern im Oberteil des Klapptischs 10 einliegen. Bei drehfester Anbringung des seitlich aus dem Klapptisch 10 vorstehenden Teils der Befestigungszapfen 16 in nicht dargestellte Aufnahmen ist der Klapptisch 10 schwenkbar um die Befestigungszapfen 16 gelagert.

Zur Begrenzung des Schwenkwinkels des Klapptischs 10 ist an jedem Befestigungszapfen 16 ein Schieber 60 im Unterteil 26 des Klapptischs 10 vorgesehen. Der Schieber 60 ist in einer Schieberführung 62 radial zum Befestigungszapfen 16 verschiebbar im Klapptisch 10 geführt. Eine zu einem Oval gebogene Blattfeder 64 drückt mit ihren beiden freien Enden 66 gegen den Schieber 60 und dadurch den Schieber 60 radial gegen den Befestigungszapfen 16. Die Doppelbügelfeder 64 ist in eine Aufnahme 68 im Unterteil 26 des Klapptischs 10 eingesetzt.

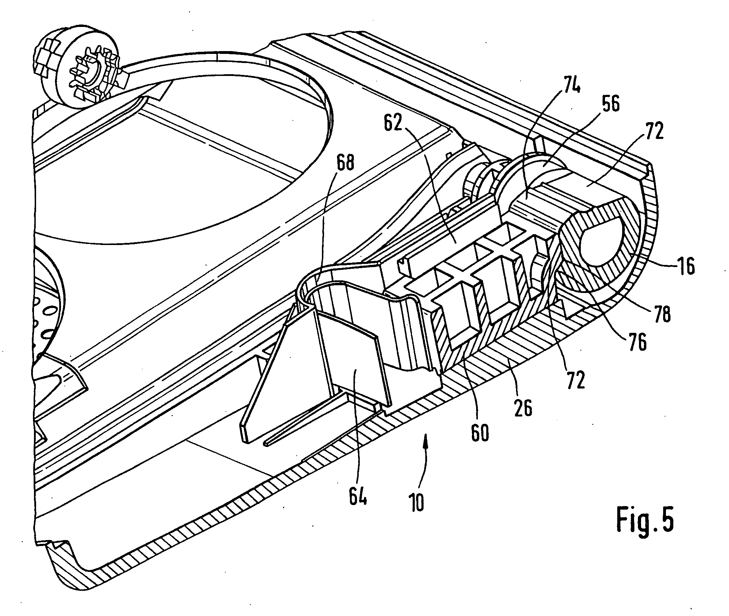

Ein zwischen den zylindrischen Lagerflächen 56 befindlicher Mittelabschnitt 70 der Befestigungszapfen 16 ist unrund geformt, die Form dieses Mittelabschnitts 70 ist am besten in Figur 5 erkennbar, die einen Längsschnitt durch den Schieber 60 und einen Radialschnitt durch den Befestigungszapfen 16 in derselben Schnittebene zeigt. Der Mittelabschnitt 70 des Befestigungszapfens 16 weist zwei Sekantenflächen 72 auf, die in etwa rechtwinklig zueinander angeordnet sind. Gegen eine der beiden Sekantenflächen 72 drückt der Schieber 60 in der Gebrauchslage des Klapptischs 10, gegen die andere Sekantenfläche 72 drückt der Schieber 60 in der Nichtgebrauchslage des Klapptischs 10. In Figuren 4 und 5 ist die Gebrauchslage des Klapptischs 10 dargestellt. Zum Verschwenken des Klapptischs 10 aus der Gebrauchslage in die Nichtgebrauchslage und umgekehrt muß der Schieber 60 einen Wulst 74 überwinden, der zwischen den beiden Sekantenflächen 72 achsparallel und einstückig am Mittelabschnitt 70 des Befestigungszapfens 16 ausgebildet ist. Der Schieber 60 hält dadurch den Klapptisch 10 in der Gebrauchslage und der Nichtgebrauchslage.

Der Befestigungszapfen 16, der Schieber 60 und die Blattfeder 64, die den Schieber 60 in radialer Richtung gegen den Befestigungszapfen 16 drückt, bilden einen Sicherheitsbeschlag des erfindungsgemäßen Klapptischs 10. Im Anschluß an die Sekantenfläche 72, gegen die der Schieber 60 in der Gebrauchslage des Klapptischs 10 drückt, weist der Befestigungszapfen 16 einen Anschlag 76 in Form einer nach außen stehenden, in Längsrichtung des Befestigungszapfens 16 verlaufenden Nase auf. In der Gebrauchslage des Klapptischs 10 liegt der Schieber 60 mit einer Stufe 78, die an seiner Stirnseite ausgebildet ist, am Anschlag 76 des Befestigungszapfens 16 an. Die Stufe 78 und der Anschlag 76 begrenzen den Schwenkwinkel des Klapptischs 10 beim Herunterklappen in die Gebrauchslage so, dass der Klapptisch 10 horizontal steht. Der Anschlag 76 und die Stufe 78 sind nicht radial zum Befestigungszapfen 16 angeordnet, sondern in einem Winkel zur Radialen. Der Anschlag 76 und die Stufe 78 bilden also Schrägflächen. Dies bewirkt, dass bei einer Überbelastung des Klapptischs 10 der Anschlag 76 den Schieber 60 vom Befestigungszapfen 16 abdrückt, so dass der Klapptisch 10 über die horizontale Gebrauchslage nach unten schwenkt. Die vom Anschlag 76 und der Stufe 78 gebildeten Schrägflächen sind so ausgerichtet und eine Federkraft der Blattfeder 64 ist so gewählt, dass der Anschlag 76 erst ab einer Grenzbelastung, die erheblich über einer üblichen, durch auf dem Klapptisch 10 abgestellten Speisen, Getränke oder sonstigen Gegenständen ausgeübten Belastung liegt, nach unten wegklappt. Die Grenzbelastung, bei deren Überschreitung der Klapptisch 10 nach unten wegklappt, liegt bei beispielsweise 13 kg. Das nach unten Wegklappen des Klapptischs 10 bei Überbelastung ist dazu vorgesehen, dass der Klapptisch 10 nachgibt, wenn bei einem Unfall ein Fahrgast gegen den Klapptisch 10 stößt. Das Verletzungsrisiko wird dadurch verringert.

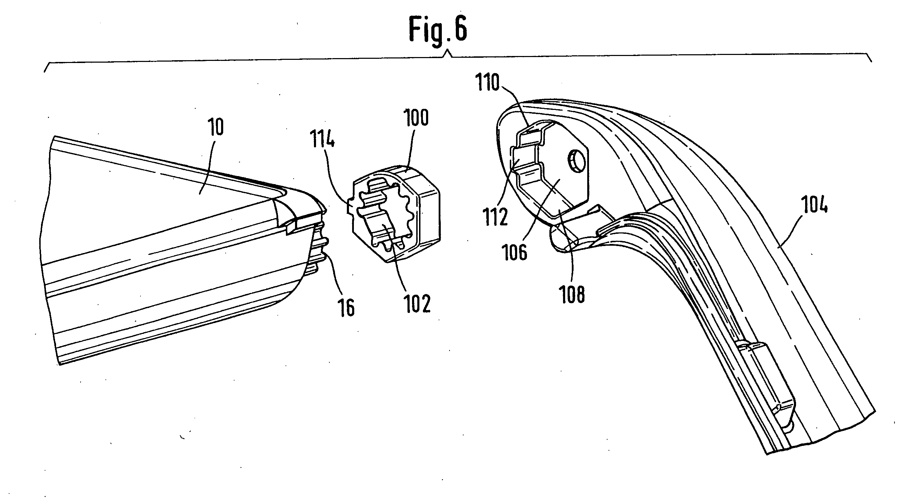

Zur Anbringung weist der Klapptisch 10 zwei Adapterringe 100 auf, die auf die seitlichen Befestigungszapfen 16 des Klapptischs 10 formschlüssig aufsetzbar sind (Figur 6). Die Befestigungszapfen 16 weisen im dargestellten Ausführungsbeispiel eine unregelmäßige Vielzahnkontur auf, auf die der Adapterring 100 mit einer komplementären Vielzahnkontur 102 an seiner Innenseite aufsetzbar ist. Die Vielzahnkonturen 102 des Befestigungszapfens 16 und des Adapterrings 100 bewirken einen Formschluß des Adapterrings 100 auf dem Befestigungszapfen 16, der eine eindeutige Winkelstellung des Adapterrings 100 auf dem Befestigungszapfen 16 festlegt.

Als Klapptischhalter sind im dargestellten Ausführungsbeispiel zwei Haltestreben 104 vorgesehen, die seitlich des Klapptisches 10 angeordnet sind. Die Haltestreben 104 sind an einem feststehenden, unteren Teil des nicht dargestellten Fahrgastsitzes angebracht und verlaufen schräg nach oben bis zu den Befestigungszapfen 16. Im Oberen Ende weisen die Haltestreben 104 Aufnahmen 106 auf, in die die Adapterringe 100 formschlüssig einsetzbar sind. Ein Umfang der Aufnahmen 106 weist vier Seiten 108 eines gedachten, unregelmäßigen Sechsecks auf, die durch eine konkav gewölbte Fläche 110 vervollständigt sind. In einer der vier Seiten 108 des gedachten Sechsecks ist eine Nut 112 angebracht. Ein Außenumfang des Adapterrings 100 ist komplementär zur Aufnahme 106 geformt, wobei ein nach außen abstehender Zapfen 114 zum Eingriff in die Nut 112 vorgesehen ist. Die Form der Aufnahme 106 und der Außenseite des Adapterrings 100 bewirkt einen Formschluß mit einer eindeutigen Winkelstellung des Adapterrings 100 in Bezug auf die Haltestrebe 104. Über den Adapterring 100 ist die Winkelstellung des Befestigungszapfens 16 des Klapptischs 10 zur Haltestrebe 104 eindeutig festgelegt und damit die horizontale Gebrauchslage des Klapptischs 10 fest eingestellt. Durch Verwendung eines Adapters 100, bei dem die Innenkontur 102 zur Außenkontur verdreht ist, läßt sich der Klapptisch 10 problemlos an Haltestreben 104 mit unterschiedlicher Neigung anpassen.

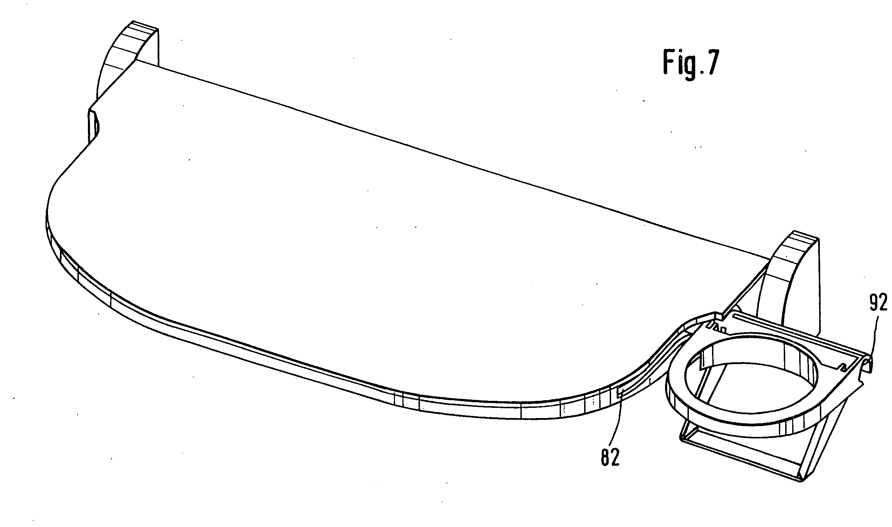

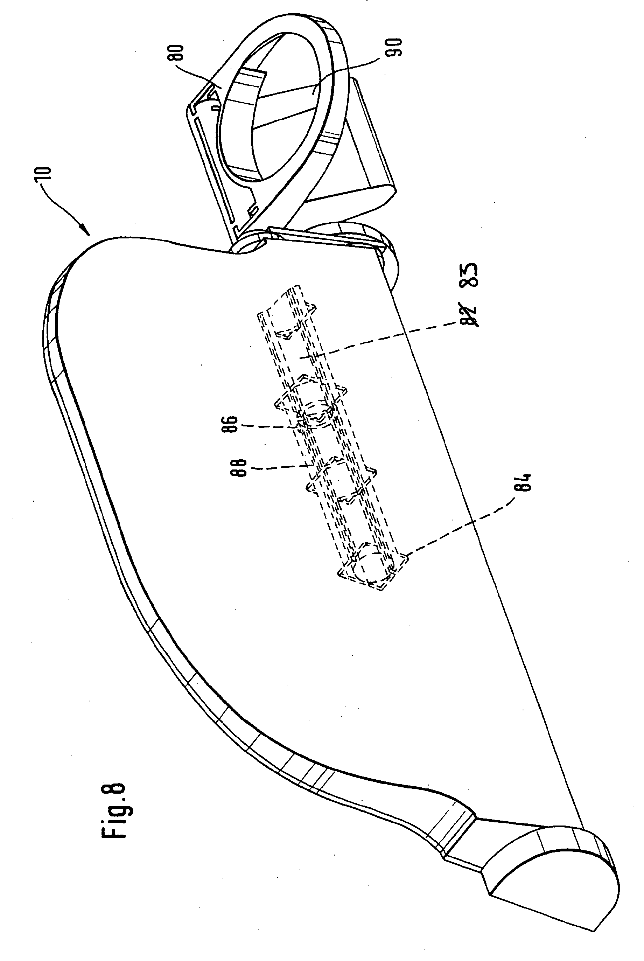

In Figuren 7 und 8 ist eine zweite Ausgestaltung eines erfindungsgemäßen Klapptischs 10 in der Gebrauchslage (Figur 7) und in der Nichtgebrauchslage (Figur 8) dargestellt. Bei dieser Ausgestaltung ist ein Halter 80 in Form eines Halterings zur Seite aus einem Schlitz 82 aus dem Klapptisch 10 ausziehbar am Klapptisch 10 angebracht. Zum Herausziehen weist der Halter 80 eine mit ihm einstückige Schiebestange 82 kreisrunden Querschnitts auf, die in Stangenhaltern 84 im Klapptisch 10 verschiebbar geführt ist. Eine radial von der Schiebestange 82 abstehende Nase 86 greift in eine in Längsrichtung der Schiebestange 82 verlaufende Nut 88 im Klapptisch 10 ein und hält den Halter 80 drehfest am Klapptisch 10. Um den Halter 80 gegenüber dem Klapptisch 10 verschwenken zu können, wird der Halter 80 über seine in Figur 6 dargestellte Gebrauchslage seitlich aus dem Klapptisch 10 herausgezogen, wodurch die Nase 86 aus der Nut 88 freikommt und der Halter 80 schwenkbar ist. Der Halter 80 läßt sich nun zur Unterseite des Klapptischs 10 verschenken, so dass er in der in Figur 8 dargestellten Nichtgebrauchslage des Klapptischs 10 eine horizontale Gebrauchslage einnimmt. Am Halter 80 ist eine Stütze 90 angebracht. Die Stütze 90 ist über eine Schwenkzapfenverbindung 92 schwenkbar mit dem Halter 80 verbunden, sie schwenkt durch Schwerkraft vom Halter 80 nach unten und stützt einen in den Halter 80 eingestellten Getränkebehälter ab.

Im übrigen ist der in Figuren 7 und 8 dargestellte Klapptisch 10 übereinstimmend mit dem in Figuren 1 bis 5 dargestellten Klapptisch aufgebaut und funktioniert in derselben Weise. Zur Vermeidung von Wiederholungen wird diesbezüglich auf die vorstehenden Erläuterungen zu Figuren 1 bis 5 verwiesen.

## Patentansprüche

1. Klapptisch zur Anbringung an einer Rückseite einer Rückenlehne eines Fahrgastsitzes in einem Omnibus oder Flugzeug, wobei der Klapptisch ein Schwenkgelenk aufweist, durch das der Klapptisch zwischen einer Nichtgebrauchslage, in der der Klapptisch im wesentlichen an der Rückseite der Rückenlehne des Fahrgastsitzes anliegt, und einer Gebrauchslage, in der der Klapptisch in etwa horizontal von der Rückseite der Rückenlehne des Fahrgastsitzes absteht, hin- und zurückschwenkbar ist, **dadurch gekennzeichnet, dass** der Klapptisch (10) einen Sicherheitsbeschlag (16, 60, 64) mit einem Anschlag (76), der den Schwenkwinkel des Klapptischs (10) in Richtung der Gebrauchslage begrenzt, aufweist, und dass der Anschlag (76) durch Überschreiten einer am Klapptisch (10) in Richtung der Gebrauchslage wirkenden Grenzbelastung überwindbar ist.

2. Klapptisch nach Anspruch 1, **dadurch gekennzeichnet, dass** der Anschlag (76) vom Umfang eines Schwenkzapfens (16) absteht, um den der Klapptisch (10) zwischen der Nichtgebrauchslage und der Gebrauchslage hin- und zurückschwenkbar ist, und dass der Anschlag (76) mit einem Schieber (60) zusammenwirkt, der von einer Schieberfeder (64) gegen den Schwenkzapfen (16) gedrückt wird, wobei der Anschlag (76) bei Überschreiten der am Klapptisch (10) wirkenden Grenzbelastung den Schieber (60) außer Eingriff drückt.

3. Klapptisch nach Anspruch 1, **dadurch gekennzeichnet, dass** der Klapptisch (10) einen Adapter (100) aufweist, der durch Formschluß in einer eindeutige Winkelstellung zu einer Schwenkachse (18) des Schwenkgelenks am Klapptisch (10) anbringbar ist, und dass der Adapter (100) durch Formschluß in einer eindeutigen Winkelstellung an einem Klapptischhalter (104) an der Rückseite der Rückenlehne des Fahrgastsitzes anbringbar ist.

4. Klapptisch nach Anspruch 3, **dadurch gekennzeichnet, dass** der Adapter ein Adapterring (100) mit einer Innenkontur (102) und einer Außenkontur ist, die den Formschluß in eindeutiger Winkelstellung bewirken.
